# EUROPÄISCHE PATENTANMELDUNG

(11) **EP 4 091 699 A2**
(43) Veröffentlichungstag der Anmeldung: **23.11.2022**
(21) Anmeldenummer: 22169929.1
(22) Anmeldetag: 26.04.2022
(51) Int. Cl.: B01D 53/04, B01D 53/96

(54) **VORRICHTUNG ZUR REDUKTION VON GERÜCHEN**

(30) Priorität: 30.04.2021 DE 102021111267
(71) Anmelder: Berbel Ablufttechnik GmbH, 48432 Rheine (DE)
(72) Erfinder: Thiebaut, Marcel, 48432 Rheine (DE); Gremme, Christin, 49477 Ibbenbüren (DE)
(74) Vertreter: Schneiders & Behrendt Bochum

(57) **Zusammenfassung**

Die Erfindung betrifft Vorrichtungen (1) zur Reduktion von Gerüchen in einem Luftstrom (2), mit einem Gehäuse (3), das wenigstens eine Einströmöffnung (4) für den Luftstrom (2) und wenigstens eine Ausströmöffnung (5) für den Luftstrom (2) aufweist, wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase, wenigstens einer Aufspalteinrichtung (7) zum Aufspalten von Geruchsstoffen, und wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen.

## Beschreibung

Die Erfindung betrifft Vorrichtungen zur Reduktion von Gerüchen in einem Luftstrom, mit einem Gehäuse, das wenigstens eine Einströmöffnung für den Luftstrom und wenigstens eine Ausströmöffnung für den Luftstrom aufweist, wenigstens einem Absorberelement im Luftstrom zwischen der Einströmöffnung und der Ausströmöffnung zur Absorption von Geruchsstoffen aus dem Luftstrom in einer Absorptionsphase, wenigstens einer Aufspalteinrichtung zum Aufspalten von Geruchsstoffen, und wenigstens einer Zirkulationseinrichtung zur Zirkulation eines Regenerationsluftstromes über das Absorberelement und die Aufspalteinrichtung, um in der Absorptionsphase absorbierte Geruchsstoffe in einer Regenerationsphase aus dem Absorberelement zu lösen und der Aufspaltung durch die Aufspalteinrichtung zuzuführen.

Die DE 195 05 058 C2 offenbart ein Gerät zur Abfallbehandlung, das eine Vorrichtung zur Reduktion von Gerüchen in einem Luftstrom aufweist, mit einem Gehäuse, das wenigstens eine Einströmöffnung für den Luftstrom und wenigstens eine Ausströmöffnung für den Luftstrom aufweist, wenigstens einem Absorberelement im Luftstrom zwischen der Einströmöffnung und der Ausströmöffnung zur Absorption von Geruchsstoffen aus dem Luftstrom in einer Absorptionsphase, und wenigstens einer Aufspalteinrichtung zum Aufspalten von Geruchsstoffen.

Die DE 10 2016 216 961 A1 offenbart ein Kältegerät mit einem Geruchssensor zum Überwachen der Luft im Innern des Kältegeräts auf Gerüche, insbesondere auf Gerüche, die auf ein verdorbenes Kühlgut hinweisen, sowie eine Überwachungsvorrichtung mit einem Geruchssensor, die in einem Kältegerät nachgerüstet werden kann.

Eine eingangs erwähnte Vorrichtung ist unter der Bezeichnung "berbel Umluftfilter permalyt^{®} BUR 150" bereits am Markt erhältlich. Diese Vorrichtung findet insbesondere bei im Umluftbetrieb arbeitenden Dunstabzugshauben Anwendung. Nachteilig an der bekannten Lösung sind der aufwendige Aufbau des Gehäuses und der hohe Energiebedarf des Katalysators, der hier als Aufspalteinrichtung dient. Außerdem kann mit der bekannten Vorrichtung die Luftfeuchtigkeit in dem Luftstrom nicht verändert werden.

Es ist daher Aufgabe der Erfindung, eine verbesserte Vorrichtung anzugeben, die einen einfacheren Aufbau bietet. Außerdem ist es Aufgabe der Erfindung, eine verbesserte Vorrichtung anzugeben, die sich durch einen geringeren Energiebedarf auszeichnet. Ferner ist es Aufgabe der Erfindung, eine verbesserte Vorrichtung anzugeben, die eine einfache Veränderung der Luftfeuchtigkeit im Luftstrom ermöglicht.

Gelöst wird diese Aufgabe durch eine Vorrichtung mit den Merkmalen des Anspruchs 1, des Anspruchs 2, des Anspruchs 3, des Anspruchs 8, des Anspruchs 12 oder des Anspruchs 13.

Dadurch, dass die Aufspalteinrichtung einen Ozongenerator, insbesondere einen Plasma-Ozongenerator umfasst, können die Geruchsstoffe in der Regenerationsphase besonders energieeffizient in der Aufspalteinrichtung aufgespalten werden. Hierzu werden die in der Absorptionsphase absorbierten Geruchsstoffe in einer Regenerationsphase aus dem Absorberelement gelöst und dem Ozongenerator zugeführt, wobei die Geruchsstoffe durch das Ozon in kleinere Moleküle vorzugsweise CO₂ und H₂O aufgespalten werden. Das Herauslösen der absorbierten Geruchsstoffe aus dem Absorberelement erfolgt vorzugsweise durch Erwärmung des Absorberelements, da sich die Geruchsstoffe bereits hierdurch einfach lösen lassen. Über die energieeffiziente Regeneration des Absorberelements in der Regenerationsphase kann das Absorberelement in einer darauffolgenden Absorptionsphase erneut Gerüche in dem Luftstrom reduzieren, der von der Einströmöffnung über das Absorberelement zur Ausströmöffnung geführt wird. Zur Regeneration des Absorberelements wird über die Zirkulationseinrichtung ein Regenerationsluftstrom erzeugt, der in dem Gehäuse über das Absorberelement und die Aufspalteinrichtung zirkuliert. Hierdurch können die in der Absorptionsphase absorbierten Geruchsstoffe leicht in der Regenerationsphase aus dem Absorberelement gelöst und zur Aufspaltung der Aufspalteinrichtung zugeführt werden. Bevorzugt ist als ein Plasma-Ozongenerator vorgesehen, der einen Wolframdraht umfasst und der ein Plasma durch Hochspannungsentladung erzeugt.

Wenn die Aufspalteinrichtung eine UV-Strahlung emittierende Strahlungsquelle umfasst, können die Geruchsstoffe in der Regenerationsphase besonders energieeffizient in der Aufspalteinrichtung aufgespalten werden. Hierzu werden die in der Absorptionsphase absorbierten Geruchsstoffe in einer Regenerationsphase einfach aus dem Absorberelement gelöst und dem Ozongenerator zugeführt, wobei die Geruchsstoffe durch die UV-Strahlung in kleinere Moleküle vorzugsweise CO₂ und H₂O aufgespalten werden. Das Herauslösen der absorbierten Geruchsstoffe aus dem Absorberelement erfolgt vorzugsweise durch Erwärmung des Absorberelements, da sich die Geruchsstoffe bereits hierdurch einfach lösen lassen. Durch die energieeffiziente Regeneration des Absorberelements in der Regenerationsphase kann das Absorberelement in einer nachfolgenden Absorptionsphase abermals Geruchsstoffe aus dem Luftstrom, welcher von der Einströmöffnung durch das Absorberelement zur Ausströmöffnung gelenkt wird, aufnehmen. Zur Regeneration des Absorberelements wird über die Zirkulationseinrichtung ein Regenerationsluftstrom erzeugt, der in dem Gehäuse über das Absorberelement und die Aufspalteinrichtung zirkuliert. Dadurch können die in der Absorptionsphase absorbierten Geruchsstoffe leicht in der Regenerationsphase aus dem Absorberelement gelöst und zur Aufspaltung der Aufspalteinrichtung zugeführt werden.

Indem eine Wärmequelle der Vorrichtung dazu ausgebildet ist, in der Regenerationsphase das Absorberelement zu erwärmen, um in der Absorptionsphase absorbierte Geruchsstoffe aus dem Absorberelement zu lösen, kann insbesondere bei der wie zuvor und im Folgenden näher beschriebenen Vorrichtung das Herauslösen von in der Absorptionsphase absorbierten Geruchsstoffen aus dem Absorberelement besonders einfach erfolgen. Die von der Aufspalteinrichtung unabhängige Wärmequelle sorgt für eine effiziente und zielgerichtete Erwärmung des Absorberelements, sodass ein besonders geringer Energiebedarf besteht. Durch die Unabhängigkeit der Wärmequelle von der Aufspalteinrichtung kann die Wärmequelle gezielt zur optimalen Erwärmung des Absorberelements gesteuert werden, sodass die in der Absorptionsphase absorbierten Geruchsstoffe besonders energieeffizient aus dem Absorberelement gelöst werden können. Die Wärmequelle heizt das Absorberelement bevorzugt auf eine Temperatur zwischen 50°C und 100°C, vorzugsweise zwischen 65°C und 80°C auf, um die absorbierten Geruchsstoffe aus dem Absorberelement zu lösen.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die Wärmequelle als PTC-Heizelement oder Heizpatrone ausgebildet ist. Derartige Wärmequellen lassen sich besonders einfach auf eine für das Herauslösen von Geruchsstoffen aus dem Absorberelement erforderliche Temperatur einstellen, sodass eine besonders energieeffiziente Regeneration des Absorberelements möglich ist.

Besonders bevorzugt ist eine Ausführungsform, die vorsieht, dass die Wärmequelle als Heizdraht oder Heizdrahtgitter ausgebildet ist. Über diesen Heizdraht oder das Heizdrahtgitter lässt sich das Absorberelement einfach gleichmäßig erwärmen. Hierzu erstreckt sich der Heizdraht oder das Heizdrahtgitter bevorzugt über das gesamte Absorberelement und ist mit diesem wärmeleitend verbunden oder darin integriert.

Eine besonders vorteilhafte Ausführung der Erfindung bezieht sich darauf, dass der Heizdraht oder das Heizdrahtgitter an einer Filtermatte des Absorberelements angeordnet ist oder der Heizdraht oder das Heizdrahtgitter zwischen mindestens zwei Filtermatten des Absorberelements angeordnet ist. Mit dieser Anordnung des Heizdrahts oder des Heizdrahtgitters kann das Absorberelement besonders einfach und energieeffizient in der Regenerationsphase erwärmt werden, da hierdurch eine direkte und gezielte Erwärmung möglich ist. Da der Heizdraht oder das Heizdrahtgitter direkt an der Filtermatte oder zwischen den Filtermatten angeordnet ist, kann eine unmittelbare Wärmeübertragung erfolgen, sodass das Absorberelement gezielt und effizient erwärmt werden kann.

Eine besonders vorteilhafte Ausführung der Erfindung sieht vor, dass das Absorberelement Aktivkohle zur Absorption von Gerüchen aus dem Luftstrom umfasst. Die Aktivkohle eignet sich hervorragend zur Bindung von Gerüchen in der Absorptionsphase und kann in der Regenerationsphase sehr einfach regeneriert werden. Hierzu kann die Aktivkohle einfach erwärmt werden, sodass sich in der Absorptionsphase absorbierte Gerüche einfach wieder aus dem Absorberelement lösen lassen.

Ferner ist Gegenstand der Erfindung eine Vorrichtung, insbesondere eine wie zuvor und im Folgenden näher beschriebene Vorrichtung, zur Reduktion von Gerüchen in einem Luftstrom, mit einem Gehäuse, das wenigstens eine Einströmöffnung für den Luftstrom und wenigstens eine Ausströmöffnung für den Luftstrom aufweist, wenigstens einem Absorberelement im Luftstrom zwischen der Einströmöffnung und der Ausströmöffnung zur Absorption von Geruchsstoffen aus dem Luftstrom in einer Absorptionsphase, wenigstens einer Aufspalteinrichtung zum Aufspalten von Geruchsstoffen, wenigstens einer Zirkulationseinrichtung zur Zirkulation eines Regenerationsluftstromes über das Absorberelement und die Aufspalteinrichtung, um in der Absorptionsphase absorbierte Geruchsstoffe in einer Regenerationsphase aus dem Absorberelement zu lösen und der Aufspaltung durch die Aufspalteinrichtung zuzuführen, und mit mindestens einem Luftentfeuchtungselement zur Reduktion von Luftfeuchtigkeit in dem Luftstrom. Über das Luftentfeuchtungselement kann sehr einfach eine zusätzliche Möglichkeit geschaffen werden, das Raumklima zu beeinflussen. Bei Anschluss der Vorrichtung an die Abluftöffnung eines Umluftdunstabzugs kann die Feuchtigkeit aus dem von dem Dunstabzug aufgesaugten Kochwrasen einfach während der Absorptionsphase über das Luftentfeuchtungselement im Luftstrom reduziert werden. Nach dem Kochvorgang kann in der Regenerationsphase neben dem Absorberelement auch das Luftentfeuchtungselement regeneriert werden. Mit einer Erwärmung des Absorberelements in der Regenerationsphase kann auch gleichzeitig das durch Erwärmung regenerierbare Luftentfeuchtungselement erwärmt werden, sodass im Luftentfeuchtungselement gespeicherte Luftfeuchtigkeit an den Regenerationsluftstrom abgegeben werden kann. Nach der Regenerationsphase kann die aus dem Luftentfeuchtungselement wieder freigegebene Luftfeuchtigkeit an die Raumluft abgegeben werden. Damit unterliegt die Luftfeuchtigkeit in der Raumluft durch den Kochvorgang weniger starken Schwankungen, da durch die Zwischenspeicherung von Feuchtigkeit in dem Luftentfeuchtungselement und die spätere Abgabe der zwischengespeicherten Feuchtigkeit an die Raumluft eine Vergleichmäßigung der Luftfeuchtigkeit in der Raumluft erreicht werden kann.

Eine vorteilhafte Ausführung der Erfindung sieht vor, dass das Luftentfeuchtungselement ein Silikagel-Granulat umfasst. In dem Silikagel-Granulat kann sehr einfach Feuchtigkeit aus dem Luftstrom in dem Luftentfeuchtungselement zur Reduktion der Luftfeuchtigkeit zwischengespeichert werden. Außerdem kann das Silikagel-Granulat sehr leicht durch eine Erwärmung in der Regenerationsphase zusammen mit dem Absorberelement regeneriert werden. Nach der Aufspaltung der in der Absorptionsphase absorbierten Geruchsstoffe in der Regenerationsphase kann die aus dem Luftentfeuchtungselement wieder gelöste Luftfeuchtigkeit aus dem Gehäuse in die Raumluft abgegeben werden. Das Silikagel-Granulat hat vorzugsweise eine Körnung von 1 bis 6 mm.

Besonders vorteilhaft ist eine Ausführungsform, die vorsieht, dass das Silikagel-Granulat in mindestens einer luftdurchlässigen Entfeuchtungskassette des Luftentfeuchtungselements angeordnet ist. Mit der Anordnung des Silikagel-Granulat in einer luftdurchlässigen Entfeuchtungskassette kann das Silikagel-Granulat sowohl bei der Bindung von Feuchtigkeit in der Absorptionsphase von dem Luftstrom durchströmt werden, als auch in der Regenerationsphase von dem Regenerationsluftstrom durchströmt werden.

Eine vorteilhafte Ausgestaltung sieht ein dem Luftentfeuchtungselement zugeordnetes elektrisches Heizelement zur Regeneration des Luftentfeuchtungselementes vor. Über ein dem Luftentfeuchtungselement zugeordnetes elektrisches Heizelement kann die Regeneration des Luftentfeuchtungselementes in der Regenerationsphase optimal gesteuert werden. Sollte die Luftfeuchtigkeit im Luftstrom zu gering sein, kann ein von der Aufspalteinrichtung unabhängiges, elektrisches Heizelement, das dem Luftentfeuchtungselement zugeordnet ist, auch zur Regeneration des Luftentfeuchtungselements in der Absorptionsphase des Absorberelements eingesetzt werden.

Ferner ist Gegenstand der Erfindung eine Vorrichtung, insbesondere eine wie zuvor und im Folgenden näher beschriebene Vorrichtung, zur Reduktion von Gerüchen in einem Luftstrom, mit einem Gehäuse, das wenigstens eine Einströmöffnung für den Luftstrom und wenigstens eine Ausströmöffnung für den Luftstrom aufweist, wenigstens einem Absorberelement im Luftstrom zwischen der Einströmöffnung und der Ausströmöffnung zur Absorption von Geruchsstoffen aus dem Luftstrom in einer Absorptionsphase, wenigstens einer Aufspalteinrichtung zum Aufspalten von Geruchsstoffen, und wenigstens einer Zirkulationseinrichtung zur Zirkulation eines Regenerationsluftstromes über das Absorberelement und die Aufspalteinrichtung, um in der Absorptionsphase absorbierte Geruchsstoffe in einer Regenerationsphase aus dem Absorberelement zu lösen und der Aufspaltung durch die Aufspalteinrichtung zuzuführen, wobei die Ausströmöffnung mit einem Vlies abgedeckt ist, das dazu ausgelegt ist, von dem Luftstrom in der Absorptionsphase zum Verlassen des Gehäuses durchströmt zu werden und den Regenerationsluftstrom in der Regenerationsphase in dem Gehäuse zurück zu halten. Mit der Abdeckung der Ausströmöffnung durch das Vlies kann der Regenerationsluftstrom einfach und wirksam am Verlassen des Gehäuses gehindert werden, sodass dieser im Gehäuse in der Regenerationsphase zirkulieren kann. Im Gegensatz zu dem im Gehäuse zirkulierenden Regenrationsluftstrom erzeugt der Luftstrom in der Absorptionsphase eine Druckdifferenz zwischen dem Gehäuseinneren und der Umgebung, sodass dieser das Gehäuse durch das Vlies verlassen kann. Ohne Druckdifferenz, d.h. in der Regenerationsphase hält das Vlies die Luft im Gehäuse hinreichend zurück.

Ferner ist Gegenstand der Erfindung eine Vorrichtung, insbesondere eine wie zuvor und im Folgenden näher beschriebene Vorrichtung, zur Reduktion von Gerüchen in einem Luftstrom, mit einem Gehäuse, das wenigstens eine Einströmöffnung für den Luftstrom und wenigstens eine Ausströmöffnung für den Luftstrom aufweist, wenigstens einem Absorberelement im Luftstrom zwischen der Einströmöffnung und der Ausströmöffnung zur Absorption von Geruchsstoffen aus dem Luftstrom in einer Absorptionsphase, wenigstens einer Aufspalteinrichtung zum Aufspalten von Geruchsstoffen, und wenigstens einer Zirkulationseinrichtung zur Zirkulation eines Regenerationsluftstromes über das Absorberelement und die Aufspalteinrichtung, um in der Absorptionsphase absorbierte Geruchsstoffe in einer Regenerationsphase aus dem Absorberelement zu lösen und der Aufspaltung durch die Aufspalteinrichtung zuzuführen, wobei die Einströmöffnung mit mindestens einer selbstschließenden Klappe versehen ist, wobei die Klappe dazu ausgelegt ist, in der Absorptionsphase durch den Druck des in das Gehäuse einströmenden Luftstromes zu öffnen und in der Regenerationsphase die Einströmöffnung zu verschließen. Mit dem Verschließen der Einströmöffnung durch die Klappe in der Regenerationsphase kann der Regenerationsluftstrom in der Regenerationsphase zirkulieren und entweicht nicht über die Einströmöffnung. Da sich die Klappe aber andererseits über den Druck des in das Gehäuse einströmenden Luftstromes öffnen lässt, kann der Luftstrom in der Absorptionsphase über die Einströmöffnung einfach in das Gehäuse einströmen und über die Ausströmöffnung aus dem Gehäuse wieder austreten. Die Klappe kann auch aktiv mechanisch oder elektrisch angetrieben sein.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Vorrichtung in einer ersten Ausführung,
- Figur 2: Ansicht von unten,
- Figur 3: Explosionsdarstellung,
- Figur 4: erste Schnittdarstellung,
- Figur 5: zweite Schnittdarstellung,
- Figur 6: dritte Schnittdarstellung,
- Figur 7: erfindungsgemäße Vorrichtung in einer zweiten Ausführung,
- Figur 8: Schnittdarstellung in Absorptionsphase,
- Figur 9: erste Schnittdarstellung in Regenerationsphase, und
- Figur 10: zweite Schnittdarstellung in Regenerationsphase.

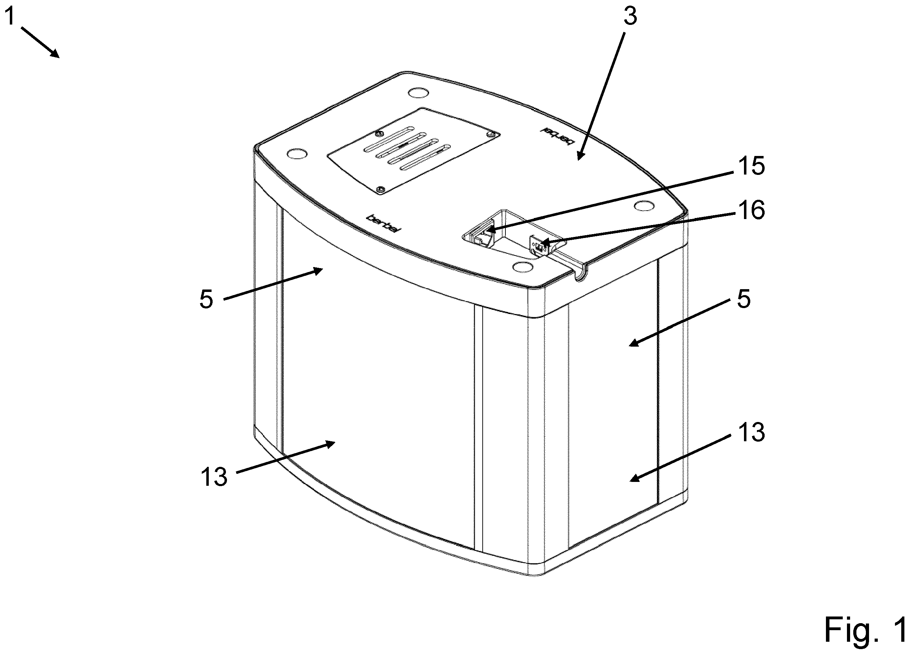

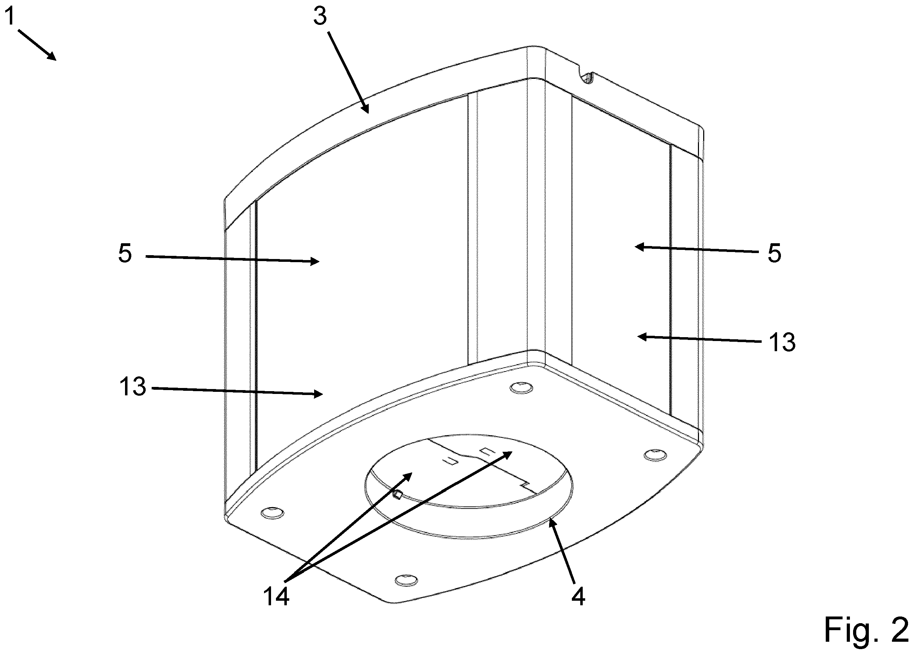

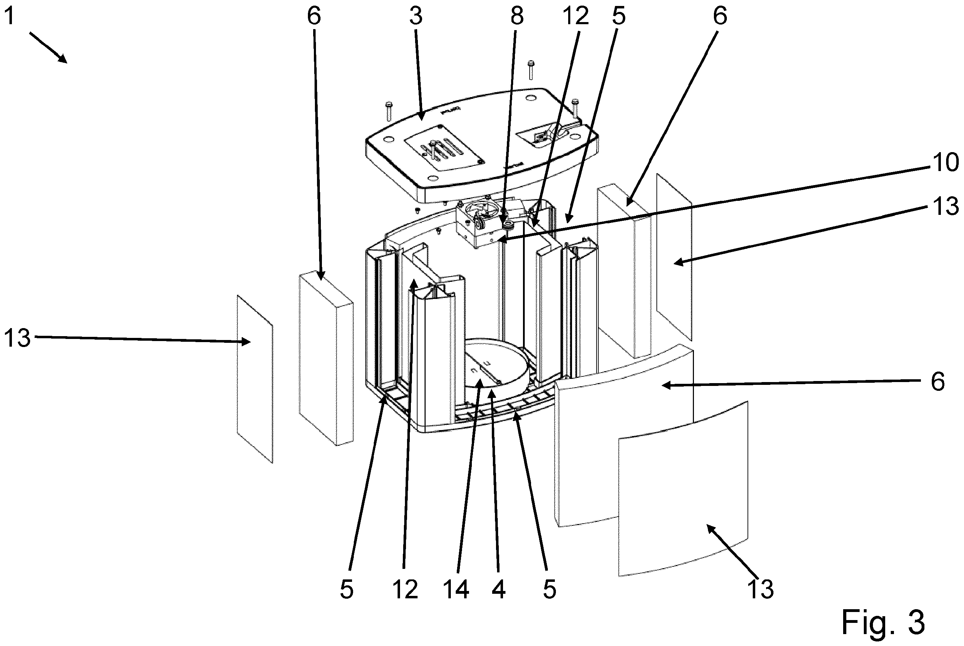

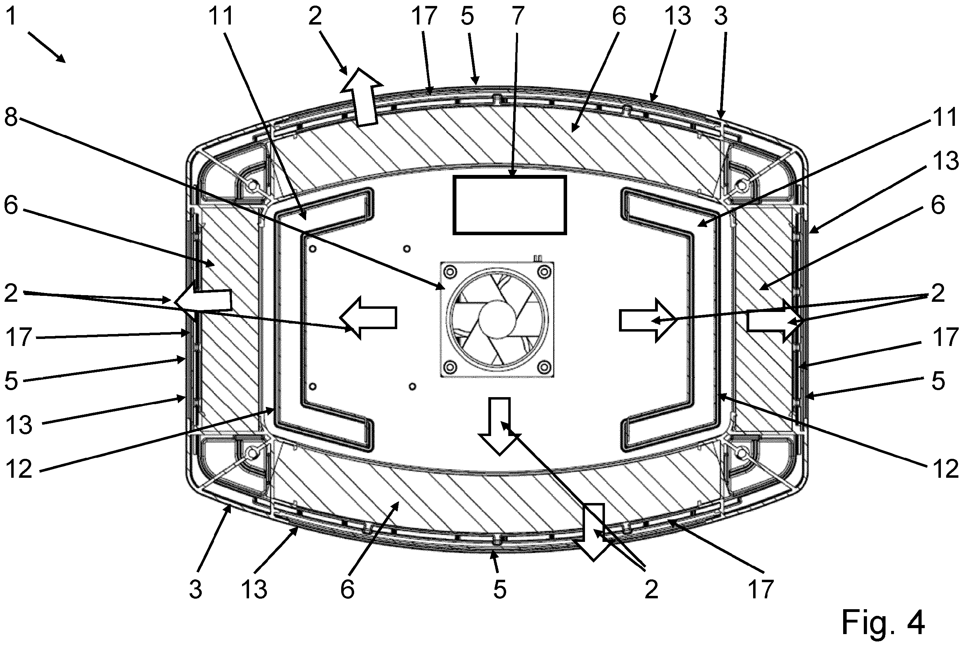

In der Figur 1 mit dem Bezugszeichen 1 bezeichnet ist eine erfindungsgemäße Vorrichtung dargestellt. Die Vorrichtung 1 zur Reduktion von Gerüchen in einem Luftstrom 2 (Fig. 4) verfügt über ein Gehäuse 3, das eine Einströmöffnung 4 (Fig. 2 oder 3) für den Luftstrom 2 (Fig. 4) und insgesamt vier Ausströmöffnungen 5 (Fig. 4) für den Luftstrom 2 (Fig. 4) aufweist. In Figur 1 ist zu erkennen, dass die Ausströmöffnungen 5 mit einem Vlies 13 abgedeckt sind, dessen Funktion im Folgenden noch näher erläutert wird. Wie zu erkennen ist, weist das Gehäuse 3 eine im Wesentlichen rechteckige Form auf, wobei die Ausströmöffnungen 5 an den vier Seitenwänden des Gehäuses 3 angeordnet sind. In der Darstellung ist auch der Netzanschluss 15, bevorzugt für einen Kaltgeräte-Netzstecker erkennbar. Neben dem Netzanschluss 15 befindet sich vorteilhafterweise noch eine Schnittstelle 16, über welche die Vorrichtung von einem externen Gerät gesteuert werden kann oder über welche Informationen zur Steuerung der Vorrichtung 1 von externen Geräten übermittelt werden können.

Die Figur 2 zeigt die Vorrichtung 1 gemäß Figur 1 in einer Ansicht von unten. In dieser Darstellung ist die Einströmöffnung 4 zu erkennen, die bevorzugt an der Unterseite des Gehäuses 3 angeordnet ist. Die Einströmöffnung 4 ist mit einer zweiteiligen selbstschließenden Klappe 14 versehen, deren Funktion im Folgenden noch näher beschrieben wird.

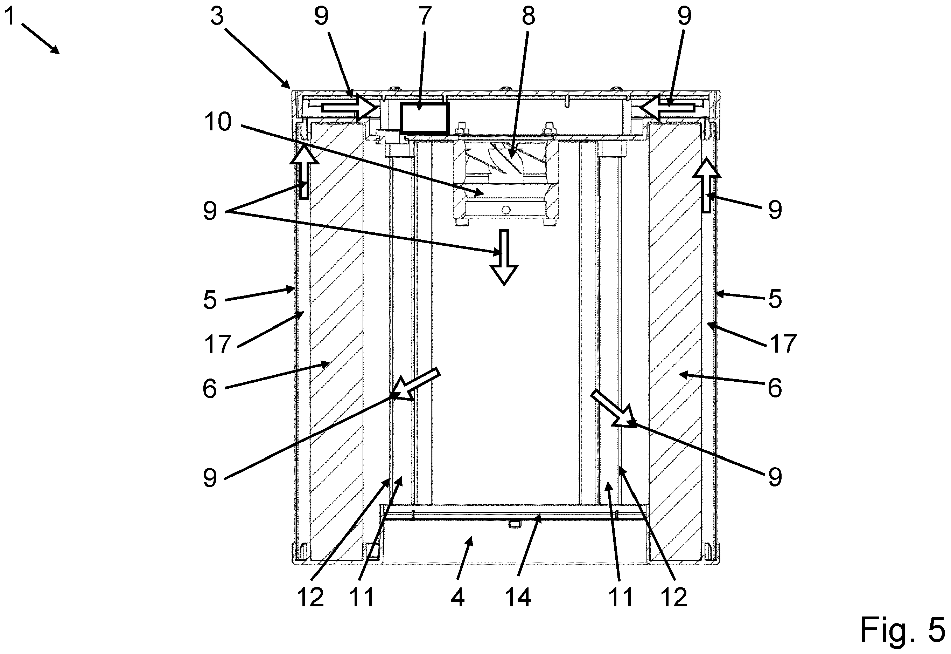

Die Figur 3 zeigt die Vorrichtung 1 gemäß den Figuren 1 und 2 in einer Explosionsdarstellung. Zu erkennen ist, dass der Luftstrom 2 (Fig. 4) in einer Absorptionsphase zur Absorption von Geruchsstoffen aus dem Luftstrom 2 (Fig. 4) über die Einströmöffnung 4 in das Innere des Gehäuses 3 eintritt. Anschließend durchströmt der Luftstrom 2 mindestens eines der Absorberelemente 6 und tritt anschließend über eine der Ausströmöffnungen 5 wieder aus dem Gehäuse 3 aus. In dem Absorberelement 6 werden hierdurch die Geruchsstoffe aus dem Luftstrom absorbiert und dadurch die Gerüche im Luftstrom 2 wirksam reduziert. Die Absorberelemente 6 umfassen Aktivkohle, in welcher die Gerüche aus dem Luftstrom 2 absorbiert werden können. Neben den Absorberelementen 6, die den Ausströmöffnungen 5 zugeordnet sind, sind in dem Gehäuse 3 auch Luftentfeuchtungselemente 11 zur Reduktion der Luftfeuchtigkeit im Luftstrom 2 (Fig. 4) vorgesehen. Die Luftentfeuchtungselemente 11 sind im Ausführungsbeispiel als mit Silikagel-Granulat gefüllte, luftdurchlässige Entfeuchtungskassetten 12 ausgebildet, die in dem Gehäuse 3 angeordnet sind. Die Entfeuchtungskassetten 12 sind vorzugsweise aus Lochblech gefertigt. In der Darstellung gemäß Figur 3 ist auch zu erkennen, dass die Ausströmöffnungen 5 mit einem Vlies 13 abgedeckt sind, welches im Luftstrom 2 dem Absorberelement 6 nachgeordnet ist. Die Darstellung in Figur 3 ermöglicht auch einen Blick auf die Zirkulationseinrichtung 8 zur Zirkulation eines Regenerationsluftstromes 9 (Fig. 5 u. 6). Im Ausführungsbeispiel ist die Zirkulationseinrichtung 8 als ein Axiallüfter 8 ausgebildet, der den im Gehäuse 3 zirkulierenden Regenerationsluftstrom 9 (Fig. 5 u. 6) erzeugt. Die Zirkulationseinrichtung 8 kann aber auch anders ausgestaltet sein, um diesen Regenerationsluftstrom 9 (Fig. 5 u. 6) zu erzeugen. Der Regenerationsluftstrom 9 (Fig. 5 u. 6) zirkuliert vorteilhafterweise über die Absorberelemente 6 und eine Aufspalteinrichtung 7 zum Aufspalten von Geruchsstoffen. Hierdurch lassen sich in der Absorptionsphase absorbierte Geruchsstoffe in einer Regenerationsphase aus dem Absorberelement 6 lösen und der Aufspaltung durch die Aufspalteinrichtung 7 zuführen. Die Aufspalteinrichtung 7 kann als Ozongenerator, insbesondere als Plasma-Ozongenerator ausgebildet sein. Die Aufspalteinrichtung 7 kann aber auch als UV-Strahlung emittierende Strahlungsquelle ausgebildet sein. So können die Geruchsstoffe in der Regenerationsphase besonders energieeffizient in der Aufspalteinrichtung 7 aufgespalten werden. Hierfür werden die in der Absorptionsphase absorbierten Geruchsstoffe in einer Regenerationsphase einfach aus dem Absorberelement 6 gelöst und dem Ozongenerator zugeführt, wobei die Geruchsstoffe durch das Ozon oder die UV-Strahlung in kleinere Moleküle, vorzugsweise CO₂ und H₂O, aufgespalten werden. Zum Herauslösen der absorbierten Geruchsstoffe aus den Absorberelementen 6, werden diese vorteilhafterweise erwärmt, da sich die Geruchsstoffe hierdurch einfach lösen lassen. Besonders geeignet ist hierzu eine von der Aufspalteinrichtung 7 unabhängige Wärmequelle 10, die in der Regenerationsphase die Absorberelemente 6 erwärmt, um in der Absorptionsphase absorbierte Geruchsstoffe aus den Absorberelementen 6 zu lösen. Die in Figur 3 gut sichtbare Klappe 14 ist selbstschließend (z.B. durch Federkraft) ausgestaltet, wobei die Klappe 14 dazu ausgelegt ist, in der Absorptionsphase durch den Druck des in das Gehäuse 3 einströmenden Luftstromes 2 zu öffnen und in der Regenerationsphase die Einströmöffnung 4 zu verschließen. Der Druck des in das Gehäuse 3 einströmenden Luftstromes 2 wird vorzugsweise von einem Gebläse, weiter bevorzugt von einem Gebläse einer an die Vorrichtung 1 angeschlossenen Dunstabzugshaube erzeugt.

In Figur 4 ist zu erkennen, dass sich zwischen den Absorberelementen 6 und den Vliesabschnitten 13 vor den Ausströmöffnungen 5 ein Luftspalt 17 befindet, dessen Funktion im Folgenden noch näher erläutert wird.

Die Figur 5 zeigt eine Schnittansicht durch die Vorrichtung 1 gemäß den Figuren 1 bis 4, wobei hier die Einströmöffnung 4 durch die selbstschließende Klappe 14 verschlossen ist, sodass der Luftstrom 2 nicht wie in der Absorptionsphase von der Einströmöffnung 4 über die Absorberelemente 6 aus den Ausströmöffnungen 5 strömt. In der hier gezeigten Regenerationsphase zirkuliert hingegen der über die Zirkulationseinrichtung 8 erzeugte Regenerationsluftstrom 9 über die Absorberelemente 6 durch den Luftspalt zwischen dem Vlies 13 und dem Absorberelement 6 über die Aufspalteinrichtung 7. Der Luftspalt 17 kann zwischen 8 und 15 mm breit sein.

Dadurch werden in der Absorptionsphase absorbierte Geruchsstoffe in der Regenerationsphase aus den Absorberelementen 6 gelöst und der Aufspaltung durch die Aufspalteinrichtung 7 zugeführt. Das Vlies 13, das die Ausströmöffnungen 5 abdeckt, dient also dazu, den Regenerationsluftstrom 9 in der Regenerationsphase in dem Gehäuse 3 zurück zu halten. In der Absorptionsphase wird das Vlies 13 hingegen von dem Luftstrom 2 (Fig. 4) zum Verlassen des Gehäuses 2 durchströmt. Das Vlies 13 kann durch Lochbleche in den Ausströmöffnungen 5 stabilisiert werden. Das Vlies 13 kann auch mit Logos oder Markennamen bedruckt sein. Außerdem kann das Vlies 13 eine Stärke von 0,5 mm bis 1,5 mm aufweisen.

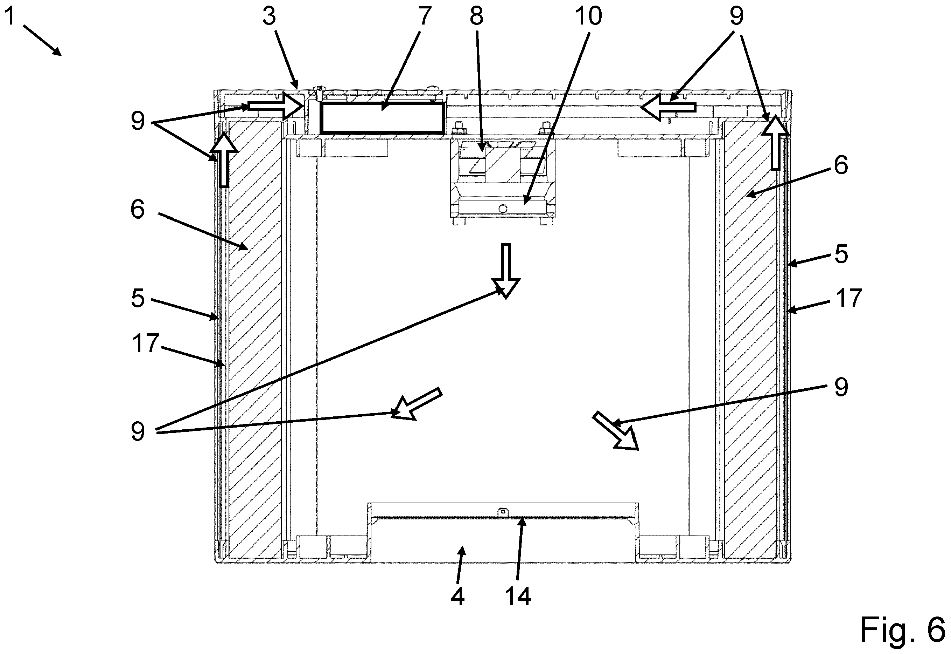

In Figur 6 ist eine um 90° gegenüber der Schnittebene gemäß Figur 5 gedrehte Schnittansicht zu sehen. In dieser Darstellung ist auch zu erkennen, wie der Regenerationsluftstrom 9 die aus den Absorberelementen 6 gelösten Geruchsstoffe der Aufspalteinrichtung 7 zuführt. Um die Absorberelemente 6 zu erwärmen und die in der Absorptionsphase absorbierten Geruchsstoffe in der Regenerationsphase wieder aus dem Absorberelement 6 zu lösen, wird der Regenerationsluftstrom 9 über eine von der Aufspalteinrichtung 7 unabhängige Wärmequelle 10 erwärmt. Diese Wärmequelle 10 ist im Ausführungsbeispiel als PTC-Heizelement ausgebildet und der Zirkulationseinrichtung 8 im Regenerationsluftstrom 9 nachgeordnet, dem Absorberelement 6 aber vorgeordnet. Den Absorberelementen 6 im Regenerationsluftstrom 9 nachgeordnet ist in diesem Ausführungsbeispiel die Aufspalteinrichtung 7 zum Aufspalten der gelösten Geruchsstoffe. Die Wärmequelle 10 kann auch als Heizpatrone ausgebildet sein. Die Wärmequelle kann aber auch als Heizdraht oder Heizdrahtgitter ausgebildet sein. Über diesen Heizdraht oder das Heizdrahtgitter können die Absorberelemente 6 einfach gleichmäßig erwärmt werden. Hierzu erstreckt sich ein Heizdraht oder ein Heizdrahtgitter bevorzugt über ein gesamtes Absorberelement 6. Der Heizdraht oder das Heizdrahtgitter können an einer Filtermatte der Absorberelemente 6 angeordnet sein oder der Heizdraht oder das Heizdrahtgitter können zwischen mindestens zwei Filtermatten eines Absorberelements 6 angeordnet sein. Durch diese Anordnung der Heizdrähte oder der Heizdrahtgitter können die Absorberelemente 6 besonders einfach und energieeffizient in der Regenerationsphase erwärmt werden, da hierdurch eine direkte und gezielte Erwärmung möglich ist. Auch den Luftentfeuchtungselementen 11 kann jeweils ein elektrisches Heizelement zur Regeneration des Luftentfeuchtungselementes 11 zugeordnet sein.

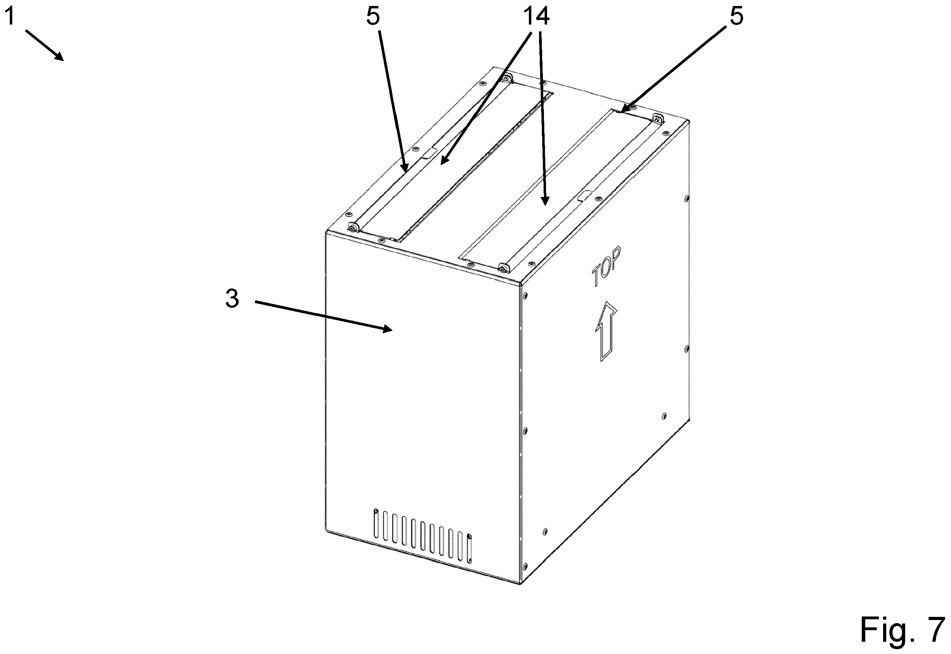

Die Figur 7 zeigt eine zweite Ausführungsform der Vorrichtung 1, die im Prinzip wie die Vorrichtung gemäß der ersten Ausführungsform (Fig. 1 bis 6) funktioniert. In Figur 7 ist allerdings bereits ein Unterschied zu erkennen. Denn in dieser Ausführung sind die Ausströmöffnungen 5 nicht mit einem Vlies 13 abgedeckt, sondern verfügen über Klappen 14, die dazu ausgelegt sind, in der Absorptionsphase durch den Druck des aus dem Gehäuse 3 ausströmenden Luftstromes 2 zu öffnen und in der Regenerationsphase die Ausströmöffnungen 5 zu verschließen.

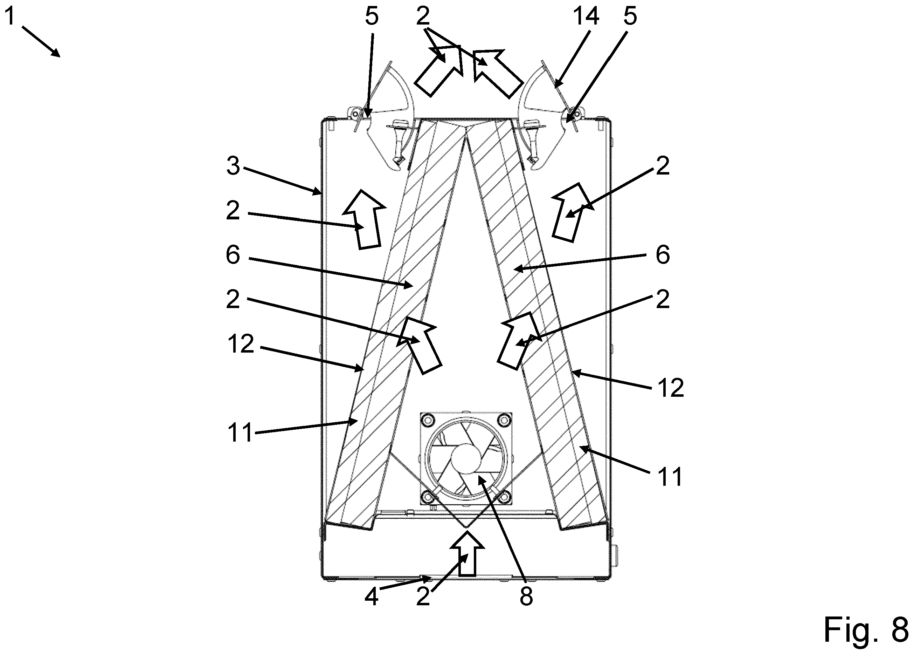

In Figur 8 ist eine Schnittdarstellung durch die Vorrichtung 1 gemäß Figur 7 gezeigt, wobei hier zu erkennen ist, wie der Luftstrom 2, der durch die Eintrittsöffnung 4 in das Gehäuse 3 eintritt über die Ausströmöffnungen 5 aus dem Gehäuse 3 wieder austritt. Die Absorberelemente 6 sind hier im Luftstrom 2 zwischen der Einströmöffnung 4 und der Ausströmöffnung 5 zur Absorption von Geruchsstoffen aus dem Luftstrom 2 in einer Absorptionsphase angeordnet.

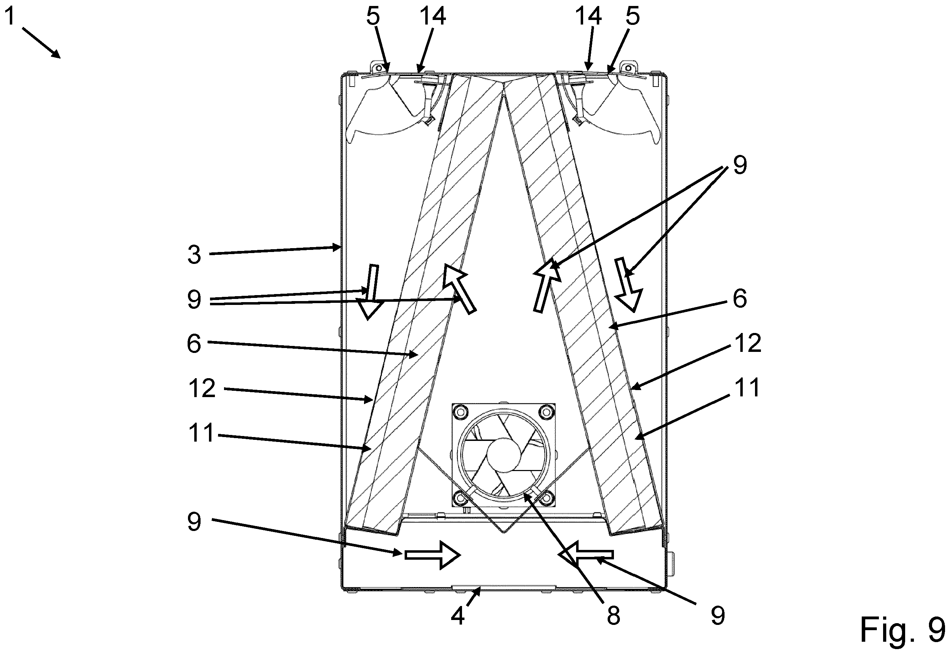

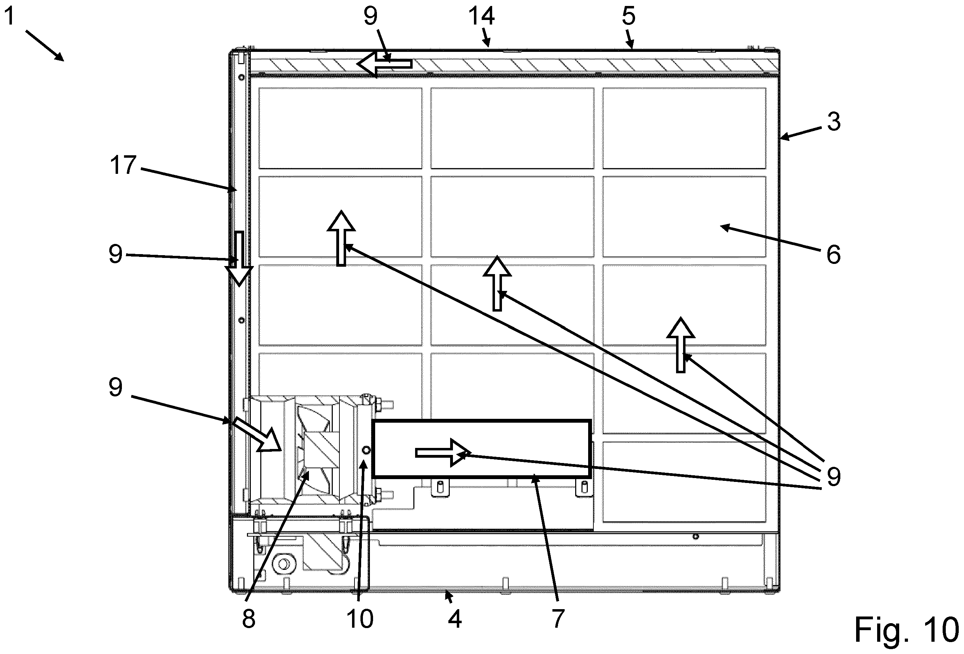

Die Figur 9 zeigt die Vorrichtung 1 gemäß Figur 7 in einer Schnittansicht, die mit der Schnittansicht gemäß Figur 8 übereinstimmt. Allerdings befindet sich die Vorrichtung 1 in Figur 9 in der Regenerationsphase, in welcher die Zirkulationseinrichtung 8 einen Regenerationsluftstrom 9 erzeugt. Dieser Regenerationsluftstrom 9 zirkuliert über die Absorberelemente 6 und die Aufspalteinrichtung 7 (Fig. 10). In der Absorptionsphase absorbierte Geruchsstoffe werden in der Regenerationsphase aus dem Absorberelement 6 gelöst und zur Aufspaltung der Aufspalteinrichtung 7 zugeführt. In dem gezeigten Ausführungsbeispiel ist die Aufspalteinrichtung 7 im Regenerationsluftstrom der Zirkulationseinrichtung 8 nachgeordnet. Im Ausführungsbeispiel ist die Zirkulationseinrichtung 8 als ein Axiallüfter 8 ausgebildet, der den im Gehäuse 3 zirkulierenden Regenerationsluftstrom 9 erzeugt. Die Zirkulationseinrichtung 8 kann aber auch anders ausgestaltet sein, um den Regenerationsluftstrom 9 zu erzeugen. In dem gezeigten Aufführungsbeispiel ist die Wärmequelle 10 zum Erwärmen der Absorberelemente 6 zwischen der Zirkulationseinrichtung 8 und der Aufspalteinrichtung 7 angeordnet. Die Wärmequelle 10 ist im Ausführungsbeispiel als PTC-Heizelement ausgebildet. Die Wärmequelle 10 kann auch als Heizpatrone ausgebildet sein. Außerdem kann die Wärmequelle auch als Heizdraht oder Heizdrahtgitter ausgebildet sein. Über diesen Heizdraht oder das Heizdrahtgitter können die Absorberelemente 6 einfach gleichmäßig erwärmt werden. Hierzu erstreckt sich ein Heizdraht oder ein Heizdrahtgitter bevorzugt über ein gesamtes Absorberelement 6. Der Heizdraht oder das Heizdrahtgitter können an einer Filtermatte der Absorberelemente 6 angeordnet sein oder der Heizdraht oder das Heizdrahtgitter können zwischen mindestens zwei Filtermatten eines Absorberelements 6 angeordnet sein. Durch diese Anordnung der Heizdrähte oder der Heizdrahtgitter können die Absorberelemente 6 besonders einfach und energieeffizient in der Regenerationsphase erwärmt werden, da hierdurch eine direkte und gezielte Erwärmung möglich ist. Wie weiter in Figur 9 zu erkennen ist, sind in dem Gehäuse 3 an den Absorberelementen 6 bevorzugt zusätzliche Luftentfeuchtungselemente 11 zur Reduktion der Luftfeuchtigkeit im Luftstrom 2 (Fig. 8) vorgesehen. Die Luftentfeuchtungselemente 11 sind im Ausführungsbeispiel als mit Silikagel-Granulat gefüllte, luftdurchlässige Entfeuchtungskassetten 12 ausgebildet, die an den Absorberelementen 6 angeordnet sind. Hierdurch können die Luftentfeuchtungselemente 11 vorteilhafterweise zusammen mit den Absorberelementen 6 zur Regeneration erwärmt werden, weiter bevorzugt durch Heizdrähte und Heizdrahtgitter zwischen den Absorberelementen 6 und den Entfeuchtungskassetten 12. Es können aber auch separate elektrische Heizelemente zur Regeneration der Luftentfeuchtungselemente 11 vorgesehen sein.

Wie in Figur 10 zu erkennen, zirkuliert der Regenerationsluftstrom 9 in der Regenerationsphase in der Vorrichtung 1 gemäß der zweiten Ausführungsform an den Klappen 14 vorbei, die die Ausströmöffnungen 5 verschließen, weiter an der Gehäusewand vorbei zu der Zirkulationseinrichtung 8, welche die Luft des Regenerationsluftstroms 9 in Richtung der Wärmequelle 10 und der Aufspalteinrichtung 7 bläst. Nach dem Aufspalten der Geruchsstoffe strömt die erwärmte Luft des Regenerationsluftstromes 9 wieder durch die Absorberelemente 6 um in der Absorptionsphase absorbierte Geruchsstoffe zu lösen.

Um die Regeneration der Absorberelemente 6 möglichst wirkungsvoll durchzuführen, ist es notwendig, dass die sich im Gehäuse 3 befindliche Luft nicht aus dem Gehäuse 3 entweicht. Hierzu wird das Gehäuse 3 während der Regenerationsphase von der Außenluft abgeschlossen, die sich somit im Gehäuse 3 befindliche Luft wird in dem Regenerationsluftstrom 9 immer wieder umgewälzt. Vorteil dieses internen Kreislaufes ist es, dass die Geruchsmoleküle immer wieder der Aufspalteinrichtung 7 zugeführt werden, hierdurch können deutlich längere Kontaktzeiten realisiert werden als bei Vorrichtungen, die direkt im Betrieb der Dunstabzugshaube die Gerüche aufspalten, somit kann die Vorrichtung 1 mit einer geringeren Ozonbelastung oder UV-Strahlung arbeiten als konventionelle Vorrichtungen.

### Bezugszeichenliste

1 Vorrichtung
2 Luftstrom
3 Gehäuse
4 Einströmöffnung
5 Ausströmöffnung
6 Absorberelement
7 Aufspalteinrichtung
8 Zirkulationseinrichtung
9 Regenerationsluftstrom
10 Wärmequelle
11 Luftentfeuchtungselement
12 Entfeuchtungskassette
13 Vlies
14 Klappe
15 Netzanschluss
16 Schnittstelle
17 Luftspalt

## Patentansprüche

1. Vorrichtung (1) zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase,
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**dadurch gekennzeichnet,**
**dass** die Aufspalteinrichtung (7) einen Ozongenerator, insbesondere einen Plasma-Ozongenerator umfasst.

2. Vorrichtung (1) zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase, und
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**dadurch gekennzeichnet,**
**dass** die Aufspalteinrichtung (7) eine UV-Strahlung emittierende Strahlungsquelle umfasst.

3. Vorrichtung (1), insbesondere nach Anspruch 1 oder 2, zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase,
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**gekennzeichnet durch**
eine von der Aufspalteinrichtung (7) unabhängige Wärmequelle (10), die dazu ausgebildet ist, in der Regenerationsphase das Absorberelement (6) zu erwärmen, um in der Absorptionsphase absorbierte Geruchsstoffe aus dem Absorberelement (6) zu lösen.

4. Vorrichtung (1) nach Anspruch 3, **dadurch gekennzeichnet, dass** die Wärmequelle (10) als PTC-Heizelement oder Heizpatrone ausgebildet ist.

5. Vorrichtung (1) nach Anspruch 3, **dadurch gekennzeichnet, dass** die Wärmequelle (10) als Heizdraht oder Heizdrahtgitter ausgebildet ist.

6. Vorrichtung (1) nach Anspruch 5, **dadurch gekennzeichnet, dass** der Heizdraht oder das Heizdrahtgitter an einer Filtermatte des Absorberelements (6) angeordnet ist oder der Heizdraht oder das Heizdrahtgitter zwischen mindestens zwei Filtermatten des Absorberelements (6) angeordnet ist

7. Vorrichtung (1) nach einem der vorhergehenden Ansprüche, **dadurch gekennzeichnet, dass** das Absorberelement (6) Aktivkohle zur Absorption von Gerüchen aus dem Luftstrom (2) umfasst.

8. Vorrichtung (1), insbesondere nach einem der vorhergehenden Ansprüche, zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase,
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**gekennzeichnet durch**
mindestens ein Luftentfeuchtungselement (11) zur Reduktion von Luftfeuchtigkeit in dem Luftstrom (2).

9. Vorrichtung (1) nach Anspruch 8, **dadurch gekennzeichnet, dass** das Luftentfeuchtungselement (11) ein Silikagel-Granulat umfasst.

10. Vorrichtung (1) nach Anspruch 9, **dadurch gekennzeichnet, dass** das Silikagel-Granulat in mindestens einer luftdurchlässigen Entfeuchtungskassette (12) des Luftentfeuchtungselements (11) angeordnet ist.

11. Vorrichtung nach einem der Ansprüche 8 bis 10, **gekennzeichnet durch** ein dem Luftentfeuchtungselement (11) zugeordnetes elektrisches Heizelement () zur Regeneration des Luftentfeuchtungselementes (11).

12. Vorrichtung (1), insbesondere nach einem der vorhergehenden Ansprüche, zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase,
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**dadurch gekennzeichnet,**
**dass** die Ausströmöffnung (5) mit einem Vlies (13) abgedeckt ist, das dazu ausgelegt ist, von dem Luftstrom (2) in der Absorptionsphase zum Verlassen des Gehäuses (2) durchströmt zu werden und den Regenerationsluftstrom (9) in der Regenerationsphase in dem Gehäuse (3) zurück zu halten.

13. Vorrichtung (1), insbesondere nach einem der vorhergehenden Ansprüche, zur Reduktion von Gerüchen in einem Luftstrom (2), mit
- einem Gehäuse (3), das wenigstens eine Einströmöffnung (4) für den Luftstrom (2) und wenigstens eine Ausströmöffnung (5) für den Luftstrom (2) aufweist,
- wenigstens einem Absorberelement (6) im Luftstrom (2) zwischen der Einströmöffnung (4) und der Ausströmöffnung (5) zur Absorption von Geruchsstoffen aus dem Luftstrom (2) in einer Absorptionsphase,
- wenigstens einer Aufspalteinrichtung (7) zum Aufspalten von Geruchsstoffen, und
- wenigstens einer Zirkulationseinrichtung (8) zur Zirkulation eines Regenerationsluftstromes (9) über das Absorberelement (6) und die Aufspalteinrichtung (7), um in der Absorptionsphase absorbierte Geruchsstoffe in einer Regenerationsphase aus dem Absorberelement (6) zu lösen und der Aufspaltung durch die Aufspalteinrichtung (7) zuzuführen,
**dadurch gekennzeichnet,**
**dass** die Einströmöffnung (4) mit mindestens einer selbstschließenden Klappe (14) versehen ist, wobei die Klappe (14) dazu ausgelegt ist, in der Absorptionsphase durch den Druck des in das Gehäuse (3) einströmenden Luftstromes (2) zu öffnen und in der Regenerationsphase die Einströmöffnung (4) zu verschließen.
